(19)

Europäisches
Patentamt
European
Patent Office
Office européen
des brevets

(11) **EP 4 122 888 A1**

(12) # EUROPEAN PATENT APPLICATION
published in accordance with Art. 153(4) EPC

(43) Date of publication:
**25.01.2023  Bulletin 2023/04**

(21) Application number: **21770791.8**

(22) Date of filing: **15.03.2021**

(51) International Patent Classification (IPC):
*C01F 7/02* (2022.01)        *C01F 7/44* (2022.01)
*C08K 9/02* (2006.01)        *C08L 101/00* (2006.01)
*C09K 5/14* (2006.01)        *C08K 3/22* (2006.01)

(52) Cooperative Patent Classification (CPC):
**C01F 7/02; C01F 7/44; C08K 3/22; C08K 9/02;
C08L 101/00; C09K 5/14**

(86) International application number:
**PCT/JP2021/010363**

(87) International publication number:
**WO 2021/187415 (23.09.2021 Gazette 2021/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.03.2020  JP 2020045795
18.02.2021  JP 2021024242**

(71) Applicant: **Mitsubishi Materials Corporation
Tokyo 100-8117 (JP)**

(72) Inventors:
• **NISHIYAMA, Masashi
Saitama-shi, Saitama 330-8508 (JP)**
• **NAGIRA, Tsumoru
Saitama-shi, Saitama 330-8508 (JP)**

(74) Representative: **Hoffmann Eitle
Patent- und Rechtsanwälte PartmbB
Arabellastraße 30
81925 München (DE)**

(54) **INORGANIC FILLER POWDER, THERMALLY CONDUCTIVE POLYMER COMPOSITION, AND METHOD FOR MANUFACTURING INORGANIC FILLER POWDER**

(57)    Provided is an inorganic filler powder (3) having a structure in which at least a portion of the surface of inorganic particles (1) having a particle size of 1 $\mu$m or more is covered with inorganic microparticles (2) having a particle size of 10 nm or more and less than 0.1 $\mu$m, in which the coverage ratio of the surface of the inorganic particles (1) by the inorganic microparticles (2) is 30% or greater.

FIG. 1

INORGANIC PARTICLE (1)

INORGANIC MICROPARTICLE (2)

3.0kV 5.0mm x10.0k SE(U)        5.00um

EP 4 122 888 A1

## Description

TECHNICAL FIELD

The present invention relates to an inorganic filler powder used as a thermally conductive material, a thermally conductive polymer composition, and a method for manufacturing an inorganic filler powder. The present invention also relates to an alumina filler for a thermally conductive resin composition, a thermally conductive resin composition, and a method for manufacturing an alumina filler for a thermally conductive resin composition.

Priority is claimed on Japanese Patent Application No. 2020-045795, filed March 16, 2020, and Japanese Patent Application No. 2021-024242, filed February 18, 2021, the contents of which are incorporated herein by reference.

BACKGROUND ART

In recent years, along with the development of electric vehicles, fuel cell vehicles, and the like, electric components increasingly use larger currents, and the amount of heat generated from the electric components is also increasing. For example, a lithium ion battery for an automobile has a large amount of heat generation because the battery continuously outputs electric power with a large current for a long period of time, and it is necessary to efficiently dissipate the large amount of generated heat to the outside. For this reason, a thermally conductive polymer composition having exceptional thermal conductivity may be used as a heat dissipation member in a portion of an electric component that outputs a large current, such as a lithium ion battery, where insulating properties are required.

Conventionally, examples of the thermally conductive polymer composition include a product in which an inorganic filler powder formed from an inorganic material having exceptional thermal conductivity is dispersed in a matrix material such as a resin having exceptional insulating properties and moldability. Regarding the inorganic filler powder, from the viewpoints of thermal conductivity and specific gravity, aluminum oxide (alumina: $Al_2O_3$), aluminum nitride (AlN), silicon dioxide ($SiO_2$), silicon nitride (SiN), magnesium oxide (MgO), and the like are generally used.

The thermal conductivity of a thermally conductive polymer composition can be enhanced by increasing the content percentage of the inorganic filler powder. As an example, in order to obtain a thermally conductive polymer composition having a high thermal conductivity of 5 W/m·K or higher, it is necessary to knead 1100 parts by mass or more of an inorganic filler powder with 100 parts by mass of a matrix material.

However, on the other hand, when the content percentage of the inorganic filler powder is increased with respect to the matrix material, there is a problem that the hardness of the obtained thermally conductive polymer composition is also increased, and the fluidity and moldability are deteriorated. Therefore, for example, Patent Document 1 and Patent Document 2 disclose polymer compositions in which by using spherical alumina particles as an inorganic filler powder, even at a high content percentage of the inorganic filler powder, hardness is suppressed to a low level, and kneading is easy. Furthermore, Patent Document 3 discloses an alumina filler in which γ-alumina particles are formed into a surface layer of α-alumina particles. Furthermore, it is disclosed in Patent Document 4 that an inorganic powder having a low hardness is added to a resin for the purpose of reducing the wear of the molding metal die for the resin.

Furthermore, in recent years, along with the development of electric vehicles, fuel cell vehicles, and the like, electric components increasingly use larger currents, and the amount of heat generated from the electric components is also increasing. For example, a lithium-ion battery for an automobile has a large amount of heat generation because the battery continuously outputs electric power with a large current for a long period of time, and it is necessary to efficiently dissipate the large amount of generated heat to the outside. Therefore, it is common to use a resin material (thermally conductive resin composition) having exceptional thermal conductivity as a package of an electric component that outputs a large current, such as a lithium-ion battery.

Conventionally, examples of the thermally conductive resin composition include a product in which an inorganic material filler having exceptional thermal conductivity is dispersed in a resin material having exceptional insulating properties and moldability. As the inorganic material filler, from the viewpoints of thermal conductivity and specific gravity, an alumina filler formed from electro-fused alumina ($Al_2O_3$) crystal particles is generally used.

The thermal conductivity of a thermally conductive resin composition can be enhanced by increasing the content percentage of the alumina filler. As an example, in order to obtain a thermally conductive resin composition having a high thermal conductivity of 5 W/m·K or higher, it is necessary to knead 1100 parts by mass or more of an alumina filler with 100 parts by mass of the resin material.

However, on the other hand, when the content percentage of the alumina filler is increased, there is a problem tin hat the hardness of the obtained thermally conductive resin composition is also increased, the filling property (shape followability) to the place of use is lowered, and it is also difficult to uniformly knead the alumina filler into the resin material during manufacturing.

Therefore, for example, Patent Document 1 discloses a resin composition in which by using spherical alumina particles as an alumina filler, even at a high content percentage of the alumina filler, the hardness is suppressed to a low level, and kneading is easy.

Furthermore, Patent Document 5 discloses roundish electro-fused alumina particles having an average particle size of 5 to 4000 $\mu$m and a circularity of 0.85 or more.

[Citation List]

[Patent Documents]

[Patent Document 1]
Japanese Patent No. 4361997
[Patent Document 2]
Japanese Unexamined Patent Application, First Publication No. 2012-121742
[Patent Document 3] Japanese Examined Patent Application, Second Publication No. H06-51778
[Patent Document 4]
Japanese Unexamined Patent Application, First Publication No. 2011-16962
[Patent Document 5]
Japanese Patent No. 4817683

SUMMARY OF INVENTION

Technical Problem

However, the spherical alumina particles used for the resin compositions disclosed in Patent Document 1 and Patent Document 2 have a problem that the manufacturing process is complicated, and the manufacturing cost is high.

Furthermore, the method of forming $\gamma$-alumina particles into a surface layer of $\alpha$-alumina particles as disclosed in Patent Document 3 also has a problem that the manufacturing cost is high because a step of heating at a high temperature is required.

In addition, the method disclosed in Patent Document 4 has a problem that when a large amount of an inorganic powder with a low hardness is added to an inorganic powder with a high hardness, the fluidity of the resin is lowered.

The present invention was made in consideration of such circumstances, and it is an objective of the invention to provide an inorganic filler powder, with which a thermally conductive polymer composition having exceptional thermal conductivity and low hardness can be obtained at low cost, a thermally conductive polymer composition that uses this inorganic filler powder, and a method for manufacturing an inorganic filler powder.

Furthermore, the spherical alumina particles used in the resin composition disclosed in Patent Document 1 have a problem that the manufacturing process is complicated, and the manufacturing cost is high.

Furthermore, although the roundish electro-fused alumina particles disclosed in Patent Document 5 use inexpensive electro-fused alumina as a raw material for manufacturing, there is a problem that the yield of the roundish electro-fused alumina particles obtained after classification is low, and consequently, high cost is required.

The present invention was made in consideration of such circumstances, and it is an objective of the invention to provide an alumina filler for a thermally conductive resin composition, with which a thermally conductive resin composition having exceptional thermal conductivity and low hardness can be obtained at low cost, a thermally conductive resin composition that uses this alumina filler, and a method for manufacturing this alumina filler for a thermally conductive resin composition.

Solution to Problem

In order to solve the above-described problems, the present invention proposes the following means.

That is, the inorganic filler powder according to an aspect of the present invention (hereinafter, referred to as "inorganic filler powder of the present invention") has a structure in which at least a portion of a surface of inorganic particles is covered with inorganic microparticles, in which the inorganic particles have a particle size of 1 $\mu$m or more, the inorganic microparticles have a particle size of 10 nm or more and less than 0.1 $\mu$m, and a coverage ratio of the surface of the inorganic particles by the inorganic microparticles is 30% or greater.

According to the inorganic filler powder of the present invention, an inorganic filler powder having a high thermal conductivity when kneaded with a matrix material can be realized at low cost as compared with the case of using conventional spherical alumina particles, by adopting a structure in which a portion of the surface of inorganic particles having a particle size of 1 $\mu$m or more is covered with inorganic microparticles having a particle size of 10 nm or more and less than 0.1 μm. Then, when the inorganic filler powder of the present invention is mixed with a matrix material, a thermally conductive polymer composition that is flexible and has exceptional shape followability can be obtained.

Furthermore, in the inorganic filler powder of the present invention, the inorganic particles and the inorganic microparticles may include aluminum oxide.

A thermally conductive polymer composition according to another aspect of the present invention (hereinafter, referred to as "thermally conductive polymer composition of the present invention") is obtained by mixing the inorganic filler powder described in each of the above-described items with a matrix material including at least one of a resin material, an elastomer material, and a rubber material.

Furthermore, the thermally conductive polymer composition of the present invention may include 1200 parts by mass or more of the inorganic filler powder with respect to 100 parts by mass of the matrix material.

A method for manufacturing an inorganic filler powder according to another aspect of the present invention (hereinafter, referred to as "method for manufacturing an inorganic filler powder of the present invention") is a method for manufacturing the inorganic filler powder according to each of the above-described items, and includes a flow polishing step of subjecting a raw material slurry obtained by mixing an inorganic raw material powder and a solvent to swirling flow at a circumferential speed of 10 m/sec or greater and polishing the inorganic raw material powder so as to obtain a fluid in which the inorganic particles and the inorganic microparticles are generated in the solvent; and a drying step of removing the solvent from the fluid and attaching the inorganic microparticles to the surface of the inorganic particles.

Furthermore, in the present invention, the inorganic raw material powder may be an electro-fused alumina powder.

Furthermore, in order to solve the above-described problems, the present invention proposes the following means.

That is, an alumina filler for a thermally conductive resin composition of another aspect of the present invention (hereinafter, referred to as "alumina filler for a thermally conductive resin composition of the present invention") is an alumina filler for a thermally conductive resin composition including electro-fused alumina particles, the alumina filler including 1% by mass or more of fine electro-fused alumina particles having a size of 1 μm or less in the electro-fused alumina particles.

According to the alumina filler for a thermally conductive resin composition of the present invention, an alumina filler for a thermally conductive resin composition, which can form a thermally conductive resin composition having exceptional moldability because hardness does not excessively increase when the alumina filler is kneaded with a resin, and containing a large amount of filler, can be realized by including at least 1% by mass or more of fine electro-fused alumina particles having a size of 1 μm or less. Furthermore, since expensive roundish alumina particles are not used, a low-cost alumina filler for a thermally conductive resin composition can be realized.

Furthermore, in the alumina filler for a thermally conductive resin composition of the present invention, the electro-fused alumina particles may have a proportion of the supernatant solid content mass of 0.3% by mass or more with respect to the total solid content mass in a 2-hour sedimentation test in water.

The thermally conductive resin composition according to another aspect of the present invention (hereinafter, referred to as "thermally conductive resin composition of the present invention") includes the alumina filler for a thermally conductive resin composition according to each of the above-described items in a resin.

Furthermore, the thermally conductive resin composition of the present invention may include 1200 parts by mass or more of the alumina filler for a thermally conductive resin composition with respect to 100 parts by mass of the resin.

A method for manufacturing an alumina filler for a thermally conductive resin composition according to another aspect of the present invention (hereinafter, referred to as "method for manufacturing an alumina filler for a thermally conductive resin composition of the present invention") is a method for manufacturing an alumina filler for a thermally conductive resin composition according to each of the above-described items, the method including a particle polishing step of subjecting a slurry obtained by mixing the electro-fused alumina particles and a solvent to swirling flow at a circumferential speed of 10 m/sec or greater, and polishing the electro-fused alumina particles by causing the electro-fused alumina particles to collide with each other.

Furthermore, in the method for manufacturing an alumina filler for a thermally conductive resin composition of the present invention, the particle polishing step may be carried out in a range of 3 minutes or more and 60 minutes or less.

Furthermore, in the method for manufacturing an alumina filler for a thermally conductive resin composition of the present invention, the particle polishing step may be a step of increasing the specific surface area of the electro-fused alumina particles by 25% or more with respect to the specific surface area of the electro-fused alumina particles before carrying out the particle polishing step.

Furthermore, in the method for manufacturing an alumina filler for a thermally conductive resin composition of the present invention, the particle polishing step may be a step of increasing the average particle size D50 of the electro-fused alumina particles by -15% or more with respect to the average particle size D50 of the electro-fused alumina particles before carrying out the particle polishing step.

Advantageous Effects of Invention

According to the present invention, an inorganic filler powder with which a thermally conductive polymer composition having exceptional thermal conductivity and low hardness can be obtained at low cost, a thermally conductive polymer composition that uses this inorganic filler powder, and a method for manufacturing an inorganic filler powder, can be provided.

Furthermore, according to the present invention, an alumina filler for a thermally conductive resin composition, with which a thermally conductive resin composition having exceptional thermal conductivity and low hardness can be obtained at low cost, a thermally conductive resin composition that uses this alumina filler, and a method for manufacturing this alumina filler for a thermally conductive resin composition, can be provided.

BRIEF DESCRIPTION OF DRAWINGS

Fig. 1 is an electron microphotograph (10000 times) showing an inorganic filler powder of a first embodiment.

Fig. 2 is an enlarged schematic diagram showing one particle of the inorganic filler powder.

Fig. 3 is an image obtained by trimming and binarizing a random rectangular region in an electron microphotograph of the inorganic filler powder.

Fig. 4 is an enlarged schematic diagram showing a thermally conductive polymer composition of a first embodiment.

Fig. 5 is an electron microphotograph of the inorganic filler powder used in Verification Example 1 (polishing time 3 minutes).

Fig. 6 is an electron microphotograph of the inorganic filler powder used in Verification Example 1 (polishing time 30 minutes).

Fig. 7 is an electron microphotograph of the inorganic filler powder used in Verification Example 1 (polishing time 45 minutes).

Fig. 8 is an electron microphotograph of the inorganic filler powder used in Verification Example 1 (polishing time 60 minutes).

Fig. 9 is a graph showing the results of Verification Example 2.

Fig. 10 is a microphotograph showing electro-fused alumina particles of a second embodiment.

Fig. 11 is a microphotograph showing conventional raw material alumina particles.

Fig. 12 is a graph showing the relationship between the number of parts by mass of alumina particles and the thermal conductivity of the obtained thermally conductive resin composition.

Fig. 13 is a photograph showing the state of a 2-hour sedimentation test.

DESCRIPTION OF EMBODIMENTS

First Embodiment

Hereinafter, an inorganic filler powder according to an embodiment of the present invention, a thermally conductive polymer composition that uses this inorganic filler powder, and a method for manufacturing an inorganic filler powder will be described with reference to the drawings. The embodiments shown below are specifically described in order to make the gist of the invention better understandable, and unless particularly stated otherwise, the embodiments are not intended to limit the present invention.

(Inorganic filler powder)

The inorganic filler powder is a thermally conductive material for obtaining a thermally conductive polymer composition by being mixed with a matrix material. The inorganic filler powder according to an embodiment of the present invention is aluminum oxide (alumina: $Al_2O_3$) having the characteristics of a fine powder.

Alumina is used as a filler for a thermally conductive polymer composition because the thermal conductivity of alumina is relatively high, such as about 30 W/m·K.

Incidentally, as the inorganic filler powder, in addition to the alumina of the present embodiment, for example, thermally conductive inorganic material powders of silicon carbide (SiC), aluminum nitride (AlN), silicon nitride (SiN), silicon dioxide ($SiO_2$), and magnesium oxide (MgO) can be used.

The inorganic filler powder of the present embodiment is obtained by polishing an electro-fused alumina powder (inorganic raw material powder) and has a structure in which at least a portion of the surface of inorganic particles having a particle size of 1 $\mu$m or more is covered with inorganic microparticles having a particle size of 10 nm or more and less

than 0.1 μm.

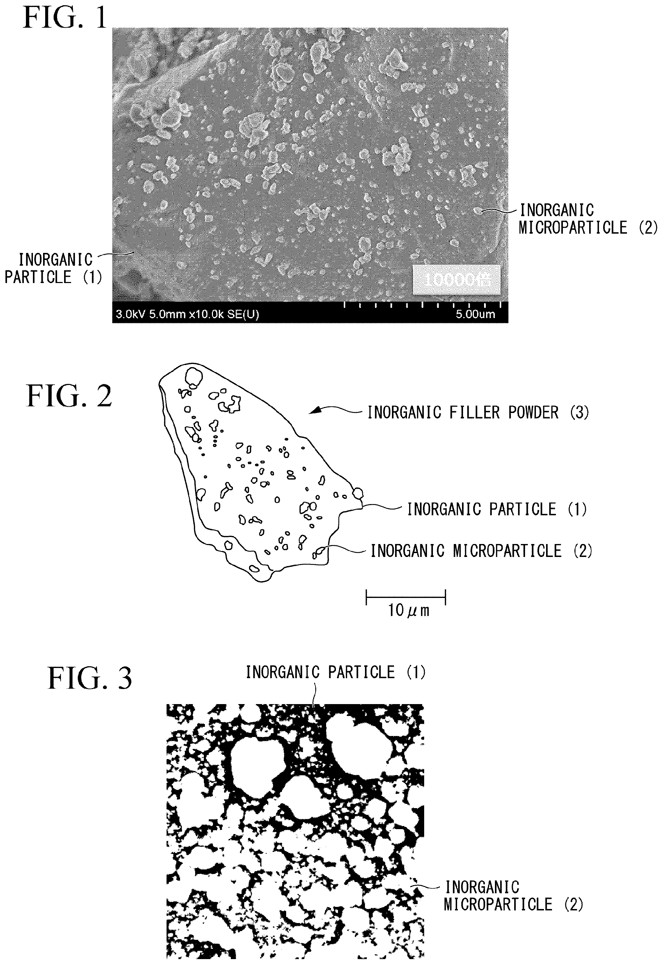

Fig. 1 is an electron microphotograph (10000 times) of the inorganic filler powder 3 of the present embodiment. Furthermore, Fig. 2 is an enlarged schematic diagram showing one particle of the inorganic filler powder 3. As shown in Fig. 1 and Fig. 2, the inorganic filler powder 3 of the present embodiment has a structure in which a portion of the surface of the inorganic particles 1 having a particle size of 1 μm or more is covered with inorganic microparticles 2 having a particle size of 10 nm or more and less than 0.1 μm. The inorganic microparticles 2 constituting the inorganic filler powder 3 are attached (fixed) to the surface of the inorganic particles 1.

In the following description, the term "inorganic particles 1" means alumina particles having a particle size of 1 μm or more, and the term "inorganic microparticles 2" means alumina particles having a particle size of 10 nm or more and less than 0.1 μm.

The coverage ratio of the surface of the inorganic particles 1 by the inorganic microparticles 2 constituting such an inorganic filler powder 3 is 30% or greater.

The coverage ratio as used herein indicates the proportion (%) of the surface area (flat surface) of the inorganic microparticles 2 with respect to the surface area (flat surface) of the inorganic particles 1 when the inorganic filler powder 3 in a random range is viewed in a plan view. As an example of the measurement of such a coverage ratio, as shown in Fig. 3, an image is prepared by trimming and binarizing a random rectangular region of an electron microphotograph (for example, a magnification of about 10000 to 100000 times) of the inorganic filler powder 3. In such an image, the portion where the inorganic particles 1 are exposed is shown in black, and the portion covered with the inorganic microparticles 2 is shown in white. Then, the coverage ratio (%) can be obtained by calculating the area occupied by the white region (area covered with the inorganic microparticles 2) with respect to the area of the trimmed rectangular region (surface area of the inorganic particles 1) by image processing.

The inorganic filler powder 3 of the present embodiment as described above can realize an inorganic filler powder having a high thermal conductivity when kneaded with a matrix material, at low cost as compared with the case of using conventional spherical alumina particles, by adopting a structure in which a portion of the surface of inorganic particles 1 having a particle size of 1 μm or more is covered with inorganic microparticles 2 having a particle size of 10 nm or more and less than 0.1 μm. Then, when the inorganic filler powder 3 of the present embodiment is mixed with a matrix material, a thermally conductive polymer composition 4 that is flexible and has exceptional shape followability can be obtained.

(Thermally conductive polymer composition)

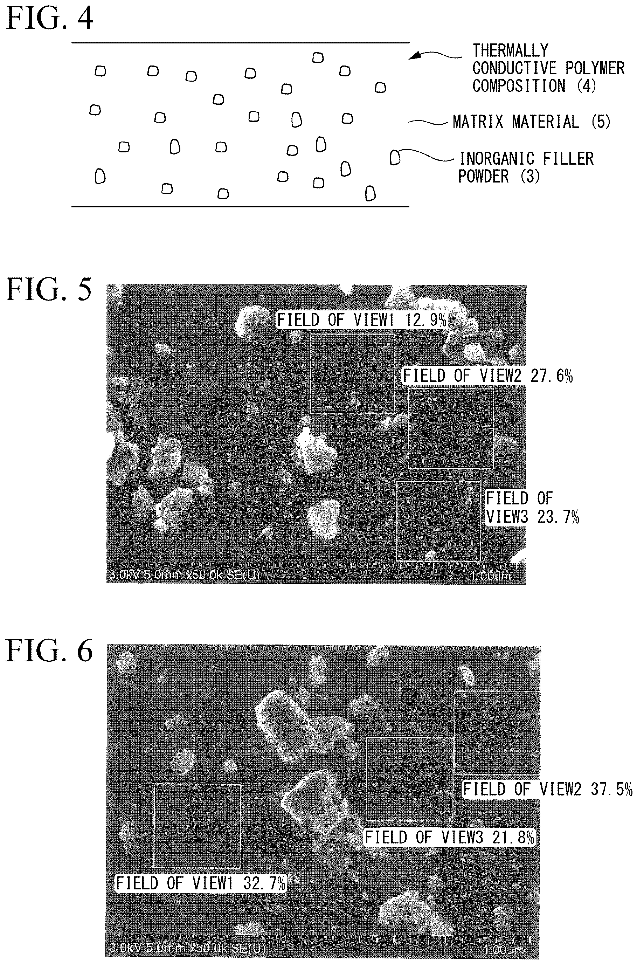

Fig. 4 is an enlarged schematic diagram showing the thermally conductive polymer composition 4 of the present embodiment.

The thermally conductive polymer composition 4 of the present embodiment is a product in which the inorganic filler powder 3 of the present embodiment is dispersed in a matrix material, and for example, the thermally conductive polymer composition 4 may be a product in a paste form obtained by mixing 1200 parts by mass or more of the inorganic filler powder 3 of the present embodiment with 100 parts by mass of a matrix material (5). For example, the thermally conductive polymer composition 4 of the present embodiment is obtained by mixing 1200 parts by mass to 7000 parts by mass of the inorganic filler powder 3 of the present embodiment with 100 parts by mass of a resin.

The matrix material 5 into which the inorganic filler powder is mixed may be any material including at least one of a resin material, an elastomer material, and a rubber material.

Among the matrix materials 5, the resin material is not particularly limited, and known resin materials can be used. Specifically, a hydrocarbon-based resin, an unsaturated polyester resin, an acrylic resin, a vinyl ester resin, an epoxy resin, and the like, a xylene formaldehyde resin, a guanamine resin, a diallyl phthalate resin, a phenol resin, a furan resin, a polyimide resin, a melamine resin, a urea resin, and the like can be mentioned.

Among the matrix materials 5, the elastomer material is not particularly limited, and known elastomer materials can be used. Specifically, a polystyrene-based elastomer, a polyvinyl chloride-based elastomer, a polyurethane-based elastomer, a polyester-based elastomer, a polyamide-based elastomer, and the like can be mentioned.

Among the matrix materials 5, the rubber material is not particularly limited, and known rubber materials can be used. Specifically, the rubber material may be either natural rubber or a synthetic rubber, and for example, a urethane rubber, a silicone rubber, a fluororubber, and the like can be mentioned.

In the thermally conductive polymer composition 4 of the present embodiment, the hardness is lowered by 40% or more at the same blending ratio, as compared with conventional thermally conductive polymer compositions in which raw material alumina particles (electro-fused alumina particles) and a resin are mixed. As a result of such a decrease in hardness, that is, softening, the fluidity of the thermally conductive polymer composition 4 of the present embodiment is enhanced.

As a result, the thermally conductive polymer composition 4 of the present embodiment can enhance the shape followability at the filled portion and can efficiently transfer heat by closely adhering to an applicable object of heat transfer without gaps. Furthermore, when the thermally conductive polymer composition 4 of the present embodiment is imparted with hardness of the same extent compared with conventional thermally conductive polymer compositions obtained by mixing raw material alumina particles (electro-fused alumina particles) with a resin, since a larger amount of the inorganic filler powder 3 can be mixed, the thermally conductive polymer composition 4 can enhance thermal conductivity as compared with a thermally conductive polymer composition that uses conventional raw material alumina particles.

(Method for manufacturing inorganic filler powder)

When manufacturing the inorganic filler powder 3 of the present embodiment, first, an inorganic raw material powder is prepared. In the present embodiment, particulate electro-fused alumina was used as the inorganic raw material powder. Particulate electro-fused alumina manufactured by reducing fusion of bauxite in an electric arc furnace was used as the inorganic raw material powder because the particulate electro-fused alumina has a large particle size and a broad particle size distribution, can be mixed into a matrix material 5 such as a resin at a high filling ratio, and can enhance the thermal conductivity of the thermally conductive polymer composition 4.

As the electro-fused alumina, a commercially available electro-fused alumina powder can be utilized. As the raw material electro-fused alumina powder, for example, an electro-fused alumina powder that has passed through a sieve having a mesh size of 100 $\mu$m is used.

Next, a raw material slurry obtained by mixing this electro-fused alumina powder (inorganic raw material powder) and a solvent is subjected to swirling flow at a circumferential speed of 10 m/sec or greater, and the particles of the electro-fused alumina powder are caused to collide with each other to be polished (flow polishing step). As a result, a fluid is generated, in which inorganic particles 1 and inorganic microparticles 2 are generated in a solvent.

Regarding a solvent for slurrifying such an electro-fused alumina powder as the inorganic raw material powder, a stable liquid that does not dissolve alumina, for example, water, is used. In the present embodiment, ion-exchanged water is used as the solvent. The concentration of the electro-fused alumina powder when water is used as the solvent may be, for example, about 70% by mass to 80% by mass.

Regarding the means for polishing by slurrifying (raw material slurry) such an electro-fused alumina powder and water, for example, an emulsifying and dispersing apparatus (Apex Disperser ZERO, manufactured by Hiroshima Metal & Machinery Co., Ltd.) may be mentioned. In this emulsifying and dispersing apparatus, a stirring rotor rotates at a high speed in a water-cooled stator. When the above-mentioned electro-fused alumina powder and water are introduced into a gap between the stator and the stirring rotor, a raw material slurry (dispersion liquid) in which the electro-fused alumina powder is homogeneously dispersed in water is formed by the rotation of the stirring rotor, and the electro-fused alumina powder is self-polished by the collision of the particles of the electro-fused alumina powder with each other in this raw material slurry.

The rotation speed of the rotor is set to a circumferential speed of 10 m/sec or greater. As a result, the raw material slurry is subjected to swirling flow at a circumferential speed of 10 m/sec or greater, the electro-fused alumina powder is efficiently polished, and thus, inorganic particles 1 having a particle size of 1 $\mu$m or more and inorganic microparticles 2 having a particle size of 10 nm or more and less than 0.1 $\mu$m can be generated in the solvent.

This is considered to be because sharp corner parts of the particles of the electro-fused alumina powder are shaved off by collision polishing between the particles of the electro-fused alumina powder so that the inorganic particles 1 are generated, and also, the shaved corner parts become the inorganic microparticles 2.

Furthermore, the polishing time for the electro-fused alumina powder (inorganic raw material powder) in such a particle polishing step may be in the range of 3 minutes or more and 60 minutes or less. When the polishing time is less than 3 minutes, there is concern that the inorganic microparticles 2 may not be sufficiently generated. Furthermore, when polishing is performed for a long period of time, there is concern that the alumina particles may be crushed, the particles may become too fine, and the number of the inorganic particles 1 may become too small. When the particles become too fine, there is concern that the viscosity may rise too high at the time of being kneaded with a resin so that the moldability may deteriorate, or a sufficient amount of the inorganic filler powder 3 cannot be mixed into the matrix material, and the thermal conductivity may not be sufficiently enhanced.

To the emulsifying and dispersing apparatus, the electro-fused alumina powder and water may be supplied individually as two liquids or may be supplied as a slurry mixed in advance.

Incidentally, other examples of the means for slurrifying and polishing the electro-fused alumina powder and water include a bead mill and a ball mill; however, there is concern that the crushing effect may be too significant, and the quality may be deteriorated due to incorporation of media such as beads and balls.

Next, the solvent is removed from the fluid in which the inorganic particles 1 and the inorganic microparticles 2 were generated in the solvent, which was obtained in the particle polishing step, and thereby an inorganic filler powder 3 in which the inorganic microparticles 2 are attached to the surface of the inorganic particles 1 is generated (drying step).

In this drying step, for example, the solvent is evaporated from the fluid by heating the fluid at about 80°C to 100°C by using a heating type dryer, and at the same time, the inorganic microparticles 2 are attached (fixed) to the surface of the inorganic particles 1 in this process of solvent evaporation.

As a result, an inorganic filler powder 3 having a structure in which at least a portion of the surface of the inorganic particles 1 having a particle size of 1 $\mu$m or more is covered with the inorganic microparticles 2 having a particle size of 10 nm or more and less than 0.1 $\mu$m and having a coverage ratio of the surface of the inorganic particles 1 by the inorganic microparticles 2 of 30% or greater is obtained.

The particle size according to the present embodiment is the median diameter(mid-diameter), that is, the average particle size D50 at which the cumulative frequency is 50%. The measurement of such an average particle size D50 was performed by using a laser diffraction scattering type particle size distribution measuring apparatus (MT3300EXII: MicrotracBEL Corporation).

(Method for manufacturing thermally conductive polymer composition)

In the method for manufacturing the thermally conductive polymer composition 4 of the present embodiment, the above-mentioned inorganic filler powder 3 of the present embodiment is kneaded with a matrix material 5. In order to knead the inorganic filler powder 3 into the matrix material 5, for example, a resin, a rotation-revolution type mixer (Rentaro: manufactured by Thinky Corporation) can be used.

The thermally conductive polymer composition 4 of the present embodiment is configured to include the inorganic filler powder 3 of the present embodiment in a matrix material 5. For example, the thermally conductive polymer composition 4 of the present embodiment can be manufactured by adding 1200 parts by mass to 7000 parts by mass of the inorganic filler powder 3 of the present embodiment to 100 parts by mass of the matrix material (5) and kneading the components with a mixer.

At this time, since the inorganic filler powder 3 has a structure in which at least a portion of the surface of the inorganic particles 1 having a particle size of 1 $\mu$m or more is covered with the inorganic microparticles 2 having a particle size of 10 nm or more and less than 0.1 $\mu$m, the filling amount of the inorganic filler powder 3 can be increased while maintaining the hardness or viscosity of the obtainable thermally conductive polymer composition 4 at the same level, as compared with the case of using raw material alumina particles directly as the alumina filler. As a result, the thermally conductive polymer composition 4 having a high thermal conductivity can be obtained.

Second Embodiment

Hereinafter, an alumina filler for a thermally conductive resin composition according to another embodiment of the present invention, a thermally conductive resin composition that uses this alumina filler, and a method for manufacturing this alumina filler for a thermally conductive resin composition will be described with reference to the drawings. The embodiments shown below are specifically described in order to make the gist of the invention better understandable, and unless particularly stated otherwise, the embodiments are not intended to limit the present invention.

(Alumina filler for thermally conductive resin composition)

An alumina filler for a thermally conductive resin composition (hereinafter, referred to as alumina filler) is a thermally conductive material that is intended to be mixed with a resin to obtain a thermally conductive resin composition. The alumina filler of another embodiment of the present invention is alumina ($Al_2O_3$) having the characteristics of a fine powder.

Alumina is used as a filler for a thermally conductive resin composition because the thermal conductivity of alumina is relatively high, such as about 30 W/m·K.

The alumina filler of the present embodiment includes electro-fused alumina particles obtainable by polishing the raw material alumina particles (electro-fused alumina particles), and specifically, the alumina filler includes at least 1 % by mass or more of fine electro-fused alumina particles having a size of 1 $\mu$m or less.

In the following description, the term "fine electro-fused alumina particles" means electro-fused alumina particles having a size of 1 $\mu$m or less, and the term "electro-fused alumina particles" as simply used means electro-fused alumina particles whose particle size is not particularly limited.

Electro-fused alumina particles manufactured by reducing fusion of bauxite in an electric arc furnace were used as the raw material alumina particles, which are the raw material for manufacturing polished electro-fused alumina particles, because the electro-fused alumina particles have a large particle size and a broad particle size distribution, can be mixed into a resin or the like at a high filling ratio, and can enhance the thermal conductivity of the thermally conductive resin composition.

Furthermore, in the alumina filler of the present embodiment, the specific surface area of the electro-fused alumina particles is larger by 25% or more with respect to the specific surface area of the raw material alumina particles. That is, electro-fused alumina particles obtained by increasing the specific surface area of the raw material alumina particles by 25% or more by polishing the raw material alumina particles by the method for manufacturing an alumina filler as will be described later, are used.

The specific surface area according to the present embodiment is the surface area per unit mass ($m^2/g$). The measurement of the specific surface area according to the present embodiment was carried out by the BET method (molecules having a known adsorption occupancy area are adsorbed on the surface of powder particles with liquid nitrogen, and the specific surface area of the sample is calculated from the adsorption amount of the molecules).

The measurement of such a specific surface area was carried out by using a fully automatic gas adsorption amount measuring apparatus (Autosorb-iQ: Quantachrome Instruments Japan G.K.).

Furthermore, the electro-fused alumina particles included in the alumina filler of the present embodiment are such that in a 2-hour sedimentation test in water, the total solid content mass with respect to the supernatant solid content mass is at least 0.3% by mass or more, preferably 2.0% by mass or more, and more preferably 5.0% by mass or more.

In the sedimentation test according to the present embodiment, the electro-fused alumina particles as a sample are suspended in water so as to obtain a concentration of 2.4% by mass to form a slurry, this slurry is poured into a container such that the liquid level height reaches 20 mm, and the slurry is left to stand for 2 hours. Subsequently, the supernatant is separated, water is evaporated at 90°C, the mass of the residual solid content is measured, and the ratio (percentage) of the mass of the residual solid content with respect to the total solid content mass of the slurry is calculated.

As the alumina filler of the present embodiment such as described above includes at least 1% by mass or more of fine electro-fused alumina particles having a size of 1 $\mu$m or less, an alumina filler having a high thermal conductivity when kneaded with a resin can be realized at lower cost as compared with the case of using spherical alumina particles. Then, when the alumina filler of the present embodiment is mixed with a resin, a thermally conductive resin composition having low hardness and exceptional shape followability can be obtained.

(Thermally conductive resin composition)

The thermally conductive resin composition of the present embodiment is configured to include the alumina filler of the present embodiment in a resin. For example, the thermally conductive resin composition may be in a paste form in which 1200 parts by mass or more of the alumina filler of the present embodiment are mixed with 100 parts by mass of the resin. For example, the thermally conductive resin composition of the present embodiment is obtained by mixing 1200 parts by mass to 1500 parts by mass of the alumina filler of the present embodiment with 100 parts by mass of the resin.

The resin to be mixed with the alumina filler is not particularly limited, and any known resin can be used without particular limitation. Specifically, a hydrocarbon-based resin, an unsaturated polyester resin, an acrylic resin, a vinyl ester resin, an epoxy resin, and the like, a xylene formaldehyde resin, a guanamine resin, a diallyl phthalate resin, a phenol resin, a furan resin, a polyimide resin, a melamine resin, a urea resin, and the like can be mentioned as examples.

In the thermally conductive resin composition of the present embodiment, the hardness is lowered in the range of 9% or more and 57% or less at the same blending ratio, as compared with conventional thermally conductive resin compositions in which raw material alumina particles (electro-fused alumina particles) and a resin are mixed. As a result of such a decrease in hardness, that is, softening, the fluidity of the thermally conductive resin composition of the present embodiment is enhanced. As a result, the thermally conductive resin composition of the present embodiment can enhance the shape followability at the filled portion and can efficiently transfer heat by closely adhering to an object of heat transfer without gaps. Furthermore, when the thermally conductive resin composition of the present embodiment is imparted with hardness of the same extent compared with conventional thermally conductive resin compositions obtained by mixing raw material alumina particles (electro-fused alumina particles) with a resin, since a larger amount of the filler can be incorporated, the thermally conductive resin composition can enhance thermal conductivity.

(Method for manufacturing alumina filler for thermally conductive resin composition)

When the alumina filler for the thermally conductive resin composition of the present embodiment is manufactured, the alumina filler is manufactured by carrying out a particle polishing step of polishing the raw material alumina particles (electro-fused alumina particles).

In the particle polishing step, a slurry obtained by mixing raw material alumina particles and a solvent is subjected to swirling flow at a circumferential speed of 10 m/sec or greater, and the raw material alumina particles are polished by causing the particles to collide with each other.

In the particle polishing step, a commercially available electro-fused alumina powder can be utilized as the raw material alumina particles (electro-fused alumina particles). Regarding the raw material electro-fused alumina powder, since it is preferable that the alumina filler does not include particles having a size of more than 100 $\mu$m when the surface roughness of the composition is considered, an electro-fused alumina powder that has passed through a sieve having a mesh size of 100 $\mu$m is used.

Incidentally, as the raw material alumina particles (electro-fused alumina particles), for example, electro-fused alumina particles including less than 1% of fine electro-fused alumina particles may be used.

Regarding a solvent for slurrifying such an electro-fused alumina powder as a raw material, a stable liquid that does not dissolve alumina, for example, water, is used. In the present embodiment, ion-exchanged water is used as the solvent. The concentration of the raw material alumina particles when water is used as the solvent may be, for example, about 70% by mass to 80% by mass.

Regarding the means for polishing by slurrifying such raw material alumina particles and water, for example, an emulsifying and dispersing apparatus (Apex Disperser ZERO, manufactured by Hiroshima Metal & Machinery Co., Ltd.) may be mentioned. In this emulsifying and dispersing apparatus, a stirring rotor rotates at a high speed in a water-cooled stator. When the above-mentioned raw material alumina particles and water are introduced into a gap between the stator and the stirring rotor, a slurry (dispersion liquid) in which the raw material alumina particles are homogeneously dispersed in water is formed by the rotation of the stirring rotor, and the raw material alumina particles are self-polished by the collision of the raw material alumina particles with each other in this slurry.

The rotation speed of the rotor may be a circumferential speed of 10 m/sec or greater. As a result, the slurry is subjected to swirling flow at a circumferential speed of 10 m/sec or greater, and the raw material alumina particles can be efficiently polished. Furthermore, the polishing time for the raw material alumina particles in such a particle polishing step may be in the range of 3 minutes or more and 60 minutes or less. When the polishing time is less than 3 minutes, there is concern that the specific surface area may not be sufficiently large with respect to the raw material alumina particles. Furthermore, when polishing is performed for a long period of time, there is concern that the alumina particles may be crushed, and the particles may become too fine. When the particles become too fine, there is concern that the viscosity may rise too high at the time of being kneaded with the resin so that the moldability may deteriorate, or a sufficient amount of the filler cannot be mixed into the resin, and the thermal conductivity may not be sufficiently enhanced.

To the emulsifying and dispersing apparatus, the raw material alumina particles and water may be supplied individually as two liquids or may be supplied as a slurry mixed in advance.

Incidentally, other examples of the means for slurrifying and polishing the raw material alumina particles and water include a bead mill and a ball mill; however, there is concern that the crushing effect may be too significant, and the quality may be deteriorated due to incorporation of media such as beads and balls.

After performing the particle polishing step as described above, polished electro-fused alumina particles are obtained by solid-liquid separation by filtration and water removal by drying. The alumina filler for a thermally conductive resin composition of the present embodiment includes 1% by mass or more of fine electro-fused alumina particles having a size of 1 $\mu$m or less obtained by the above-mentioned method.

As such, the average particle size D50 of the electro-fused alumina particles obtained by polishing the raw material alumina particles by causing the particles to collide with each other is not significantly changed from that of the raw material alumina particles. For example, the average particle size D50 of the electro-fused alumina particles is larger by -15% or more than the average particle size D50 of the raw material alumina particles and is larger by about 15% at the maximum.

The average particle size D50 according to the present embodiment is the median diameter (mid-diameter), that is, the particle size at which the cumulative frequency is 50%. The measurement of such an average particle size D50 was performed by using a laser diffraction scattering type particle size distribution measuring apparatus (MT3300EXII: MicrotracBEL Corporation).

Incidentally, when the raw material alumina particles are polished, the average particle size D50 of the electro-fused alumina particles is always smaller than the average particle size D50 of the raw material alumina particles. That is, in principle, there is no chance that the average particle size D50 of the electro-fused alumina particles becomes a plus to the average particle size D50 of the raw material alumina particles. However, when fine particles after polishing are not sufficiently collected, the apparent average particle size D50 of the electro-fused alumina particles may be larger.

On the other hand, the specific surface area of the polished electro-fused alumina particles is significantly increased from that of the raw material alumina particles. For example, the rate of change in the specific surface area of the polished electro-fused alumina particles with respect to the raw material alumina particles is at least 25% and is about 150% at the maximum.

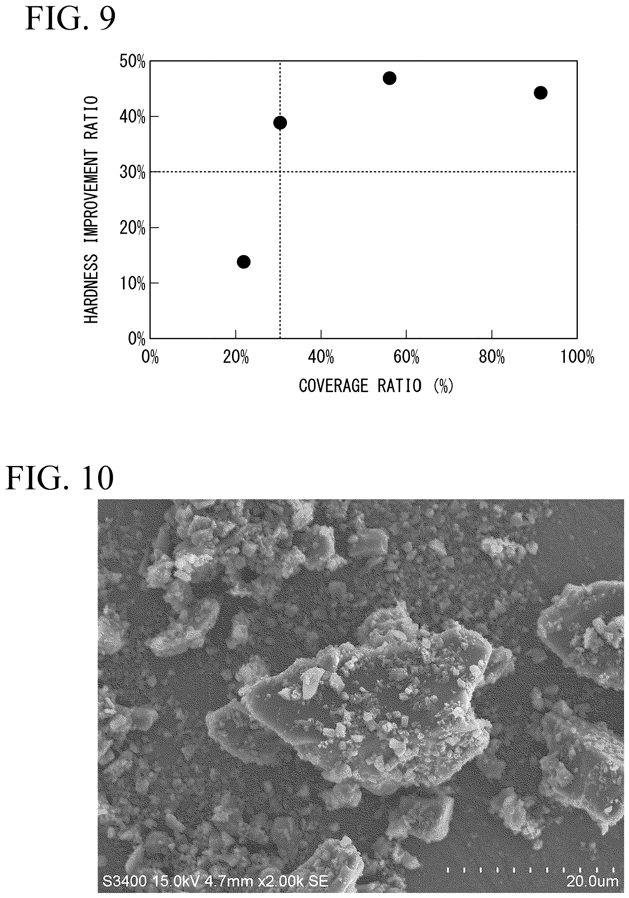

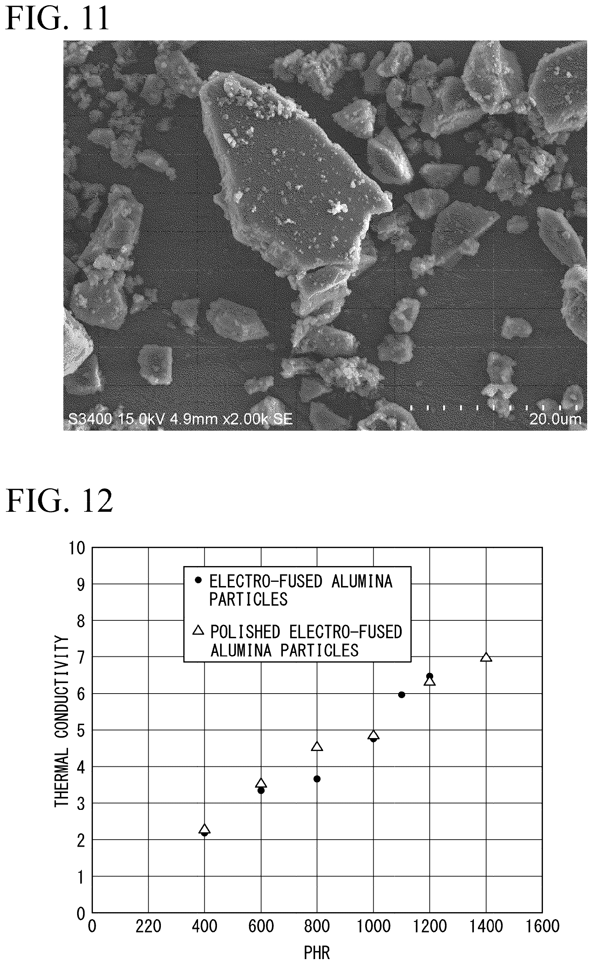

It is considered that this is a result of the collision polishing of the raw material alumina particles, which caused the sharp corner parts of the raw material alumina particles to be slightly rounded and the number of fine electro-fused alumina particles to increase. Fig. 10 shows a microphotograph of such electro-fused alumina particles of the present embodiment, and Fig. 11 shows a microphotograph of conventional raw material alumina particles. According to this microphotograph, it can be confirmed that in the electro-fused alumina particles after polishing, the corner parts of particles having a size of several $\mu$m or more are rounded, and the number of fine electro-fused alumina particles having a size of 1 $\mu$m or less is increased. As such, by increasing the number of fine electro-fused alumina particles, the filler content in the resin composition can be increased when the electro-fused alumina particles are used as an alumina filler, and the thermal conductivity is increased.

Regarding the alumina filler of the present embodiment, an alumina filler in which the average particle size D50 of the electro-fused alumina particles is larger by - 15% or more, and more preferably in the range of -15% or more and +15% or less, than the average particle size D50 of the raw material alumina particles, can be used.

(Method for manufacturing thermally conductive resin composition)

In the method for manufacturing a thermally conductive resin composition of the present embodiment, an alumina filler including the polished electro-fused alumina particles of the present embodiment as described above is kneaded with a resin. For the kneading of the alumina filler with the resin, for example, a rotation-revolution type mixer (Rentaro: manufactured by Thinky Corporation) can be used.

The thermally conductive resin composition of the present embodiment is configured to include the alumina filler of the present embodiment in a resin. For example, the thermally conductive resin composition of the present embodiment can be manufactured by adding 1200 parts by mass to 1500 parts by mass of the alumina filler of the present embodiment to 100 parts by mass of a resin and kneading the components by means of a mixer. At this time, as the alumina filler includes the polished electro-fused alumina particles, the filling amount of the alumina filler can be increased while maintaining the hardness or viscosity of the obtainable thermally conductive resin composition at the same level, as compared with the case of using raw material alumina particles directly as the alumina filler. As a result, a thermally conductive resin composition having a high thermal conductivity is obtained.

Thus, the first and second embodiments of the present invention of the present invention have been described above; however, these embodiments are presented as examples and are not intended to limit the scope of the invention. This embodiment can be implemented in various other forms, and various abridgements, substitutions, and alterations can be made to the extent that maintains the gist of the invention. This embodiment and modifications thereof are included in the scope and gist of the invention and are similarly included in the invention described in the claims and an equivalent scope thereof.

[First Example]

Hereinafter, the verification results for verifying the effect of the present invention will be shown.

Electro-fused alumina powder V325F (average particle size D50 = 11.1 $\mu$m: manufactured by Nippon Light Metal Co., Ltd.) was used as an inorganic raw material powder. The electro-fused alumina powder was prepared into a slurry having a concentration of 72% by mass with ion-exchanged water, and a polishing treatment of the electro-fused alumina powder was performed by using an emulsifying and dispersing apparatus (Apex Disperser ZERO, manufactured by Hiroshima Metal & Machinery Co., Ltd.) and setting the circumferential speed of the stirring rotor to 32 m/s to 35 m/s and the time to 3 minutes, 30 minutes, 45 minutes, or 60 minutes, to obtain each fluid.

Next, the fluid was heated to 90°C by using a heating furnace to evaporate water, which was the solvent, and the residue was pulverized in a mortar to obtain an inorganic filler powder.

Then, the obtained inorganic filler powder and a butadiene-based polymer (R-45HT: manufactured by Idemitsu Kosan Co., Ltd.) as a matrix material were kneaded by using a rotation-revolution type mixer (Awatori Rentaro: manufactured by Thinky Corporation) to obtain a thermally conductive polymer composition.

At this time, 1400 parts by mass of the inorganic filler powder were added to 100 parts by mass of the matrix material.

(Verification Example 1)

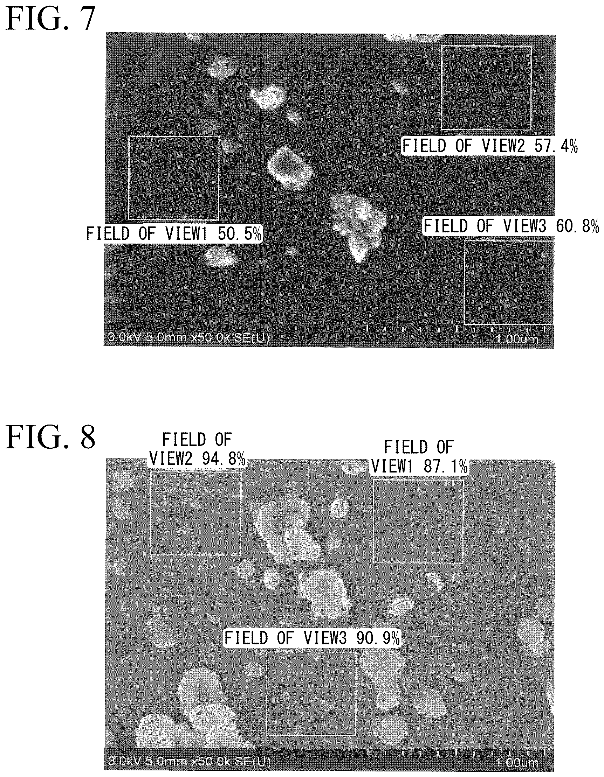

Electron microphotographs of the inorganic filler powders obtained at each of the above-mentioned polishing times were taken. Fig. 5 shows the case where the polishing time was 3 minutes, Fig. 6 shows the case where the polishing time was 30 minutes, Fig. 7 shows the case where the polishing time was 45 minutes, and Fig. 8 shows the case where the polishing time was 60 minutes.

Incidentally, in each of the photographs shown in Fig. 5 to Fig. 8, a black background portion is an enlarged portion of the surface of one inorganic particle, and many particles having a size of less than 0.1 $\mu$m displayed on this background portion are inorganic microparticles.

Then, in each of these electron microphotographs of Fig. 5 to Fig. 8, a random rectangular region (0.5 $\mu$m $\times$ 0.5 $\mu$m) was set at each of three sites (fields of view 1 to 3), binarization processing as shown in Fig. 3 was performed, and then the coverage ratio (%) of the inorganic particles by the inorganic microparticles was calculated. The results of this coverage ratio are presented in Table 1.

[Table 1]

| Coverage ratio (%) | | | | |
|---|---|---|---|---|
| Polishing time | 3 minutes | 30 minutes | 45 minutes | 60 minutes |
| Field of view 1 | 12.9 | 32.7 | 50.5 | 87.1 |
| Field of view 2 | 27.6 | 35.7 | 57.4 | 94.8 |
| Field of view 3 | 23.7 | 21.8 | 60.8 | 90.9 |
| Average | 21.4 | 30.1 | 56.2 | 90.9 |
| Coverage ratio of unpolished raw material = 14.5% | | | | |

According to Table 1, it was confirmed that as the polishing time is longer, the coverage ratio is higher. It was confirmed that an inorganic filler powder in which the surface of inorganic particles having a particle size of 1 μm or more is covered with inorganic microparticles having a particle size of 10 nm or more and less than 0.1 μm, can be generated by subjecting a raw material slurry obtained by diffusing an electro-fused alumina powder as an inorganic raw material powder in a solvent to swirling flow at a circumferential speed of 10 m/sec or greater and thereby polishing the inorganic raw material powder.

(Verification Example 2)

Next, the hardness was measured for each thermally conductive polymer composition that used an inorganic filler powder (average coverage ratio 21.4%) at a polishing time of 3 minutes, an inorganic filler powder (average coverage ratio 30.1%) at a polishing time of 30 minutes, an inorganic filler powder (average coverage ratio 56.2%) at a polishing time of 45 minutes, an inorganic filler powder (average coverage ratio of 90.9%) at a polishing time of 60 minutes, and an electro-fused alumina powder (average coverage ratio 14.5%), which was a raw material that was not polished. Measurement of hardness: Durometer (Asker rubber hardness meter A type: Kobunshi Keiki Co., Ltd.)

Then, the hardness improvement ratio (%) of the thermally conductive polymer composition that used each of the inorganic filler powders with varying polishing time, was measured with respect to the hardness of the thermally conductive polymer composition that used an electro-fused alumina powder as a raw material.

$$\text{Hardness improvement ratio } (\%) = \text{Hardness of thermally conductive polymer composition using inorganic filler powder / hardness of thermally conductive polymer composition using electro-fused alumina powder} \times 100$$

These results are shown in a graph in Fig. 9.

According to the results shown in Fig. 9, it was found that when a thermally conductive polymer composition is manufactured by using an inorganic filler powder in which the average coverage ratio of the inorganic microparticles with respect to the inorganic particles was 30% or more, the hardness became softer by 40% or more than that of the conventional thermally conductive polymer composition using an electro-fused alumina powder that was not polished, and flexibility was significantly enhanced.

[Second Example]

Hereinafter, the verification results for verifying the effect of the present invention will be shown.

(Verification Example 3)

An electro-fused alumina powder V325F (average particle size D50 = 11.1 μm: manufactured by Nippon Light Metal Co., Ltd.) was used as the raw material alumina particles (electro-fused alumina particles). The raw material alumina particles were prepared into a slurry having a concentration of 72% by mass with ion-exchanged water, and a polishing treatment of the raw material alumina particles was performed by using an emulsifying and dispersing apparatus (Apex Disperser ZERO, manufactured by Hiroshima Metal & Machinery Co., Ltd.) and setting the circumferential speed of the stirring rotor to 35 m/s and the time to 60 minutes. As a result, electro-fused alumina particles of Verification Example 3 (hereinafter, referred to as polished alumina particles 1) were obtained.

Then, these electro-fused alumina particles 1 and a butadiene-based polymer (R-45HT: manufactured by Idemitsu Kosan Co., Ltd. (hereinafter, referred to as resin 1)) were kneaded by using a rotation-revolution type mixer (Awatori Rentaro: manufactured by Thinky Corporation), and a thermally conductive resin composition of Verification Example 3 was obtained.

At this time, a graph showing the relationship between the number of parts by mass (PHR) of each of the raw material alumina particles and the polished alumina particles 1 added to 100 parts by mass of the resin 1, and the thermal conductivity of the obtained thermally conductive resin composition is shown in Fig. 12.

The measurement of the thermal conductivity was carried out by a disc heat flux meter method (manufactured in-house, JIS A 1412-1, or a device based on ASTMD5470 with a rod made of aluminum).

According to the graph shown in Fig. 12, there is no significant change in the measured values of thermal conductivity of the thermally conductive resin compositions between when the raw material alumina particles were added to the resin 1 and when the polished electro-fused alumina particles 1 were added to the resin 1. Therefore, it was confirmed that there is no change in the filling state between the raw material alumina particles and the polished electro-fused alumina particles 1.

On the other hand, with regard to the raw material alumina particles, 1200 parts by mass at the maximum of the raw material alumina particles could be added to 100 parts by mass of the resin, whereas 1400 parts by mass of the polished electro-fused alumina particles could be added. Therefore, the thermally conductive resin composition using the polished electro-fused alumina particles as a filler could have a higher thermal conductivity because a larger amount of the filler could be added.

(Verification Example 4)

As the raw material alumina particles (electro-fused alumina particles), electro-fused alumina powder V325F (average particle size D50 = 11.1 $\mu$m: manufactured by Nippon Light Metal Co., Ltd.) was used (hereinafter, referred to as raw material 1). 1270 g of this raw material 1 was used to be mixed with 680 g of ion-exchanged water to prepare a slurry, and a polishing treatment of the raw material 1 was carried out by using an emulsifying and dispersing apparatus (Apex Disperser ZERO, manufactured by Hiroshima Metal & Machinery Co., Ltd.) and setting the circumferential speed to 35 m/s and the time to each of 3 minutes (sample 01), 30 minutes (sample 02), 45 minutes (sample 03), and 60 minutes (sample 04).

Then, 100 parts by mass of the resin 1 and 1400 parts by mass of each of the raw material 1 and the samples 01 to 04 were kneaded to produce thermally conductive resin compositions of Verification Example 4.

The specific surface areas and the average particle sizes D50 of the raw material 1 and the samples 01 to 04, and the rate of change of each of the samples with respect to the raw material 1 are presented in Table 2. Furthermore, the hardness of each of the thermally conductive resin compositions that used the raw material 1 and the samples 01 to 04, and the rates of change with respect to the thermally conductive resin composition that used the raw material 1 are presented in Table 2. The instrument used for each measurement is as follows.

Measurement of specific surface area: BET method, fully automatic gas adsorption amount measuring apparatus (Autosorb-iQ: Quantachrome Instruments Japan G.K.)

Measurement of average particle size D50: Laser diffraction scattering method, particle size distribution measuring apparatus (MT3300EXII: MicrotracBEL Corporation)

Measurement of hardness: Durometer (Asker rubber hardness meter A type: Kobunshi Keiki Co., Ltd.)

[Table 2]

| | Hardness | Rate of change in hardness | Specific surface area (m²/g) | Rate of change in specific surface area | Average particle size D50 ($\mu$m) | Rate of change in average particle size D50 |
|---|---|---|---|---|---|---|
| Raw material 1 | 70 | - | 2.23 | - | 11.08 | - |

(continued)

| | Hardness | Rate of change in hardness | Specific surface area (m²/g) | Rate of change in specific surface area | Average particle size D50 (μm) | Rate of change in average particle size D50 |
|---|---|---|---|---|---|---|
| Sample 01 | 46 | -34% | 3.26 | 46% | 12.17 | 10% |
| Sample 02 | 40 | -43% | 3.97 | 78% | 11.49 | 4% |
| Sample 03 | 34 | -51% | 4.05 | 82% | 11.30 | 2% |
| Sample 04 | 30 | -57% | 4.65 | 109% | 11.28 | 2% |

(Verification Example 5)

As the raw material alumina particles (electro-fused alumina particles), a mixture obtained by uniformly mixing 75% by mass of electro-fused alumina powder V325F (average particle size D50 = 11.1 μm: manufactured by Nippon Light Metal Co., Ltd.) and 25% by mass of electro-fused alumina powder F220 (average particle size D50 = 60 μm: manufactured by Nippon Light Metal Co., Ltd.) was used (hereinafter, referred to as raw material 2). 1270 g of this raw material 2 was used to be mixed with 680 g of ion-exchanged water to prepare a slurry, and a polishing treatment of the raw material 2 was carried out by using an emulsifying and dispersing apparatus (Apex Disperser ZERO, manufactured by Hiroshima Metal & Machinery Co., Ltd.) and setting the circumferential speed to 32 m/s and the time to each of 15 minutes (sample 11), 30 minutes (sample 12), and 45 minutes (sample 13).
Then, 100 parts by mass of the resin 1 and 1400 parts by mass of each of the raw material 2 and the samples 11 to 13 were kneaded to produce thermally conductive resin compositions of Verification Example 5.
The specific surface areas and the average particle sizes D50 of the raw material 2 and the samples 11 to 13, and the rate of change of each of the samples with respect to the raw material 2 are presented in Table 3. Furthermore, the hardness of each of the thermally conductive resin compositions that used the raw material 2 and the samples 11 to 13, and the rates of change with respect to the thermally conductive resin composition that used the raw material 2 are presented in Table 3. The instrument used for each measurement is similar to that used in Verification Example 3.

[Table 3]

| | Hardness | Rate of change in hardness | Specific surface area (m²/g) | Rate of change in specific surface area | Average particle size D50 (μm) | Rate of change in average particle size D50 |
|---|---|---|---|---|---|---|
| Raw material 2 | 55 | - | 1.73 | - | 23.58 | - |
| Sample 11 | 44 | -20% | 2.16 | 25% | 25.96 | 10% |
| Sample 12 | 40 | -27% | 2.50 | 45% | 24.95 | 6% |
| Sample 13 | 30 | -45% | 3.91 | 126% | 21.12 | -10% |

(Verification Example 6)

As the raw material alumina particles (electro-fused alumina particles), a mixture obtained by uniformly mixing 50% by mass of electro-fused alumina powder V325F (average particle size D50 = 11.1 μm: manufactured by Nippon Light Metal Co., Ltd.) and 50% by mass of electro-fused alumina powder F220 (average particle size D50 = 60 μm: manufactured by Nippon Light Metal Co., Ltd.) was used (hereinafter, referred to as raw material 3). 1270 g of this raw material 3 was used to be mixed with 680 g of ion-exchanged water to prepare a slurry, and a polishing treatment of the raw material 3 was carried out by using an emulsifying and dispersing apparatus (Apex Disperser ZERO, manufactured by Hiroshima Metal & Machinery Co., Ltd.) and setting the circumferential speed to 32 m/s and the time to each of 15 minutes (sample 21), 30 minutes (sample 22), and 45 minutes (sample 23).

Then, 100 parts by mass of the resin 1 and 1400 parts by mass of each of the raw material 3 and the samples 21 to 23 were kneaded to produce thermally conductive resin compositions of Verification Example 6.

The specific surface areas and the average particle sizes D50 of the raw material 3 and the samples 21 to 23, and the rate of change of each of the samples with respect to the raw material 3 are presented in Table 4. Furthermore, the hardness of each of the thermally conductive resin compositions that used the raw material 3 and the samples 21 to 23, and the rates of change with respect to the thermally conductive resin composition that used the raw material 3 are presented in Table 4. The instrument used for each measurement is similar to that used in Verification Example 3.

[Table 4]

| | Hardness | Rate of change in hardness | Specific surface area ($m^2$/g) | Rate of change in specific surface area | Average particle size D50 ($\mu$m) | Rate of change in average particle size D50 |
|---|---|---|---|---|---|---|
| Raw material 3 | 44 | - | 1.02 | - | 46.83 | - |
| Sample 21 | 40 | -9% | 1.34 | 31% | 46.73 | 0% |
| Sample 22 | 36 | -18% | 1.64 | 61% | 45.44 | -3% |
| Sample 23 | 35 | -20% | 2.54 | 149% | 40.00 | -15% |

(Verification Example 7)

As the raw material alumina particles (electro-fused alumina particles), electro-fused alumina powder V325F (average particle size D50 = 11.1 $\mu$m: manufactured by Nippon Light Metal Co., Ltd.) was pulverized and classified by a jet mill (product number STJ-200: Seishin Corporation) to obtain an electro-fused alumina powder having an average particle size of D50 = 3.9 $\mu$m (hereinafter, referred to as raw material 4). 720 g of this raw material 4 was used to be mixed with 680 g of ion-exchanged water to prepare a slurry, and a polishing treatment of the raw material 4 was carried out by using an emulsifying and dispersing apparatus (Apex Disperser ZERO, manufactured by Hiroshima Metal & Machinery Co., Ltd.) and setting the circumferential speed to 32 m/s and the time to each of 30 minutes (sample 31) and 60 minutes (sample 32).

Then, 100 parts by mass of the resin 1 and 1 100 parts by mass of each of the raw material 4 and the samples 31 and 32 were kneaded to produce thermally conductive resin compositions of Verification Example 7.

The specific surface areas and the average particle sizes D50 of the raw material 4 and the samples 31 and 32, and the rate of change of each of the samples with respect to the raw material 4 are presented in Table 5. Furthermore, the hardness of each of the thermally conductive resin compositions that used the raw material 4 and the samples 31 and 32, and the rates of change with respect to the thermally conductive resin composition that used the raw material 4 are presented in Table 5. The instrument used for each measurement is similar to that used in Verification Example 3.

[Table 5]

| | Hardness | Rate of change in hardness | Specific surface area ($m^2$/g) | Rate of change in specific surface area | Average particle size D50 ($\mu$m) | Rate of change in average particle size D50 |
|---|---|---|---|---|---|---|
| Raw material 4 | 69 | - | 2.64 | - | 3.93 | - |
| Sample 31 | 52 | -25% | 6.04 | 129% | 4.29 | 9% |

(continued)

|  | Hardness | Rate of change in hardness | Specific surface area (m²/g) | Rate of change in specific surface area | Average particle size D50 (µm) | Rate of change in average particle size D50 |
|---|---|---|---|---|---|---|
| Sample 32 | 50 | -28% | 6.50 | 146% | 4.29 | 9% |

According to the results shown in Tables 2 to 5, it was confirmed that it is possible to increase only the specific surface area (+25% to +146%) without significantly changing the average particle size D50 (within the range of -15% to +10%), by polishing each of the commercially available electro-fused alumina powders of the raw materials 1 to 4.
It was confirmed that the thermally conductive resin compositions of the present embodiment produced by using the samples 01 to 04, 11 to 13, 21 to 23, 31, and 32 obtained by subjecting such raw materials 1 to 4 to a polishing treatment, can reduce the hardness (-9% to -57%) and enhance the shape followability as compared with the conventional thermally conductive resin compositions produced by using the raw materials 1 to 4.

(Verification Example 8)

Each of the raw material 1 of Verification Example 3 and the sample 04 described above was used, 400 parts by mass of 600 parts by mass of each of the raw material 1 and the sample 04 was kneaded with 100 parts by mass of the resin 1 to produce each of thermally conductive resin compositions (compositions 1 to 4), and the viscosity was measured. The viscosity and the rate of change in viscosity are presented in Table 6.
Incidentally, the instrument used for the measurement is as follows.
Measurement of viscosity: B type viscometer (PM-2A manufactured by Malcom Co., Ltd.)

[Table 6]

|  | Number of mixed parts of alumina particles | Viscosity (Pa·s) | Rate of change in viscosity |
|---|---|---|---|
| Raw material 1 | 400 parts by mass | 129 | - |
|  | 600 parts by mass | 670 | - |
| Sample 04 | 400 parts by mass | 81 | -37% |
|  | 600 parts by mass | 272 | -59% |

According to the results shown in Table 6, it was confirmed that the thermally conductive resin compositions 3 and 4 that used the sample 04, which was the polished electro-fused alumina particles of the present embodiment, can reduce the viscosity (-37% to -59%) and enhance the shape followability as compared with the conventional thermally conductive resin compositions 1 and 2 that used the raw material 1.

(Verification Example 9)

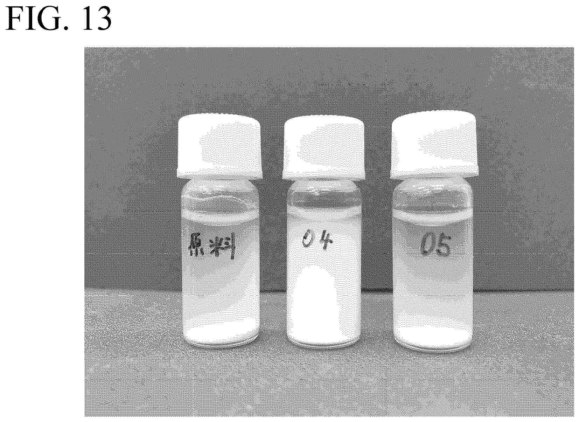

In order to specify the characteristics of the raw material 1 of Verification Example 3, the sample 04, and an electro-fused alumina powder (sample 05) obtained by polishing the raw material 1 with a bead mill (manufactured by IMEX Co., Ltd.: circumferential speed 7.2 m/s), a 2-hour sedimentation test was performed.
With regard to the test method, 1 g of each of the raw material 1 and the electro-fused alumina powders of the samples 04 and 05 was mixed with 40 g of ion-exchanged water to produce a slurry (each at a concentration of 2.4% by mass), and the slurry was poured into a sample tube with a lid (inner diameter of 10 mm) such that the liquid level height was 20 mm. Then, the slurry was left to stand at room temperature for 2 hours, subsequently the supernatant solid content was separated, and the mass was measured. Then, the ratio of the total solid content mass to this supernatant solid content mass was calculated. These results are presented in Table 7. Furthermore, the state of the test is shown in Fig. 13.

[Table 7]

|  | Supernatant solid content mass / total solid content mass (%) |
|---|---|
| Raw material 1 | 0 |

(continued)

| | Supernatant solid content mass / total solid content mass (%) |
|---|---|
| Sample 04 | 5.5 |
| Sample 05 | 0.3 |

According to the results shown in Table 7, it was found that in contrast with the electro-fused alumina powder (raw material 1) of the raw material 1, the polished electro-fused alumina powders of the present embodiment (samples 04 and 05) were such that the total solid content mass with respect to the supernatant solid content mass was 5.7% by mass and 0.3% by mass. Furthermore, it was found that this proportion of the total solid content mass with respect to the supernatant solid content mass tends to increase as the polishing time for the electro-fused alumina powder of the raw material 1 increases.

From these results, it was confirmed that fine electro-fused alumina particles having a size of 1 $\mu$m or less, which were particles fine to the extent capable of floating on water, were formed by polishing of the electro-fused alumina particles (raw material 1). As a result of forming such finely polished electro-fused alumina particles having a size of 1 $\mu$m or less, the specific surface areas of the samples 04 and 05 are increased with respect to the raw material 1, and the thermal conductivity can be enhanced.

INDUSTRIAL APPLICABILITY

An inorganic filler powder with which a thermally conductive polymer composition having exceptional thermal conductivity and low hardness can be obtained at low cost, a thermally conductive polymer composition that uses this inorganic filler powder, and a method for manufacturing an inorganic filler powder, can be provided.

[Reference Signs List]

1: Inorganic particle
2: Inorganic microparticle
3: Inorganic filler powder
4: Thermally conductive polymer composition
5: Matrix material

**Claims**

1. An inorganic filler powder having a structure in which at least a portion of a surface of inorganic particles is covered with inorganic microparticles,

   wherein the inorganic particles have a particle size of 1 $\mu$m or more,
   the inorganic microparticles have a particle size of 10 nm or more and less than 0.1 $\mu$m, and
   a coverage ratio of the surface of the inorganic particles by the inorganic microparticles is 30% or greater.

2. The inorganic filler powder according to Claim 1,
   wherein the inorganic particles and the inorganic microparticles include aluminum oxide.

3. A thermally conductive polymer composition comprising the inorganic filler powder according to Claim 1 or 2 mixed into a matrix material including at least one of a resin material, an elastomer material, and a rubber material.

4. The thermally conductive polymer composition according to Claim 3,
   wherein the thermally conductive polymer composition includes 1200 parts by mass or more of the inorganic filler powder with respect to 100 parts by mass of the matrix material.

5. A method for manufacturing the inorganic filler powder according to Claim 1 of 2, the method comprising:

a flow polishing step of subjecting a raw material slurry obtained by mixing an inorganic raw material powder and a solvent to swirling flow at a circumferential speed of 10 m/sec or greater and polishing the inorganic raw material powder so as to obtain a fluid in which the inorganic particles and the inorganic microparticles are generated in the solvent; and

a drying step of removing the solvent from the fluid to attach the inorganic microparticles to the surface of the inorganic particles.

6. The method for manufacturing an inorganic filler powder according to Claim 5,
wherein the inorganic raw material powder is electro-fused alumina powder.

FIG. 1

INORGANIC
MICROPARTICLE (2)

INORGANIC
PARTICLE (1)

3.0kV 5.0mm x10.0k SE(U)          5.00um

FIG. 2

INORGANIC FILLER POWDER (3)

INORGANIC PARTICLE (1)

INORGANIC MICROPARTICLE (2)

$10\mu m$

FIG. 3

INORGANIC PARTICLE (1)

INORGANIC
MICROPARTICLE (2)

## FIG. 4

THERMALLY
CONDUCTIVE POLYMER
COMPOSITION (4)

MATRIX MATERIAL (5)

INORGANIC FILLER
POWDER (3)

## FIG. 5

FIELD OF VIEW1 12.9%

FIELD OF VIEW2 27.6%

FIELD OF VIEW3 23.7%

3.0kV 5.0mm x50.0k SE(U)    1.00um

## FIG. 6

FIELD OF VIEW2 37.5%

FIELD OF VIEW3 21.8%

FIELD OF VIEW1 32.7%

3.0kV 5.0mm x50.0k SE(U)    1.00um

## FIG. 7

FIELD OF VIEW2 57.4%

FIELD OF VIEW3 60.8%

FIELD OF VIEW1 50.5%

3.0kV 5.0mm x50.0k SE(U)    1.00um

## FIG. 8

FIELD OF
VIEW2 94.8%

FIELD OF
VIEW1 87.1%

FIELD OF VIEW3 90.9%

3.0kV 5.0mm x50.0k SE(U)    1.00um

FIG. 9

FIG. 10

# FIG. 11

S3400 15.0kV 4.9mm x2.00k SE     20.0um

# FIG. 12

FIG. 13

**INTERNATIONAL SEARCH REPORT**

| International application No. |
|---|
| PCT/JP2021/010363 |

**A.  CLASSIFICATION OF SUBJECT MATTER**
Int.Cl. C01F7/02(2006.01)i, C01F7/44(2006.01)i, C08K9/02(2006.01)i, C08L101/00(2006.01)i, C09K5/14(2006.01)i, C08K3/22(2006.01)i
FI:C01F7/44A, C08L101/00, C08K3/22, C01F7/02K, C09K5/14E, C08K9/02
According to International Patent Classification (IPC) or to both national classification and IPC

**B.  FIELDS SEARCHED**

Minimum documentation searched (classification system followed by classification symbols)
Int.Cl. C01F7/02, C01F7/44, C08K9/02, C08L101/00, C09K5/14, C08K3/22

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X | WO 2010/093035 A1 (MURATA MANUFACTURING CO., LTD.) 19 August 2010 (2010-08-19), claim 1, paragraph [0035], fig. 4 | 1, 3 |
| A | the whole document | 2, 4-6 |
| X | JP 2002-020652 A (KAO CORPORATION) 23 January 2002 (2002-01-23), claims 1, 3-4, paragraph [0022] | 1 |
| A | the whole document | 2-6 |
| A | JP 5-125223 A (MIZUSAWA IND CHEM LTD.) 21 May 1993 (1993-05-21), the whole document | 1-6 |
| A | JP 2012-140510 A (TOYO TIRE & RUBBER CO., LTD.) 26 July 2012 (2012-07-26), the whole document | 1-6 |
| A | JP 63-020340 A (SHOWA DENKO KK) 28 January 1988 (1988-01-28), the whole document | 1-6 |
| A | JP 62-191420 A (SHOWA ALUM IND KK) 21 August 1987 (1987-08-21), the whole document | 1-6 |

☐  Further documents are listed in the continuation of Box C.    ☒  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 12 May 2021 | 25 May 2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

INTERNATIONAL SEARCH REPORT
Information on patent family members

International application No.

PCT/JP2021/010363

| | | |
|---|---|---|
| WO 2010/093035 A1 | 19 August 2010 | US 2011/0293922 A1<br>claim 1, paragraphs [0051], [0052],<br>fig. 4<br>EP 2397524 A1<br>claim 1, paragraph [0035], fig. 4<br>KR 10-2011-0101241 A<br>claim 1, paragraphs [0052], [0053],<br>fig. 4<br>CN 102317376 A<br>claim 1, paragraphs [0068], [0069],<br>fig. 4 |
| JP 2002-020652 A | 23 January 2002 | (Family: none) |
| JP 5-125223 A | 21 May 1993 | (Family: none) |
| JP 2012-140510 A | 26 July 2012 | (Family: none) |
| JP 63-020340 A | 28 January 1988 | US 5340781 A<br>the whole document<br>EP 276321 A1<br>the whole document |
| JP 62-191420 A | 21 August 1987 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020045795 A
- JP 2021024242 A
- JP 4361997 B
- JP 2012121742 A
- JP H0651778 B
- JP 2011016962 A
- JP 4817683 B